# EUROPEAN PATENT APPLICATION

(11) **EP 2 548 443 A1**
(43) Date of publication of application: **23.01.2013**
(21) Application number: 12460040.4
(22) Date of filing: 09.07.2012
(51) Int. Cl.: A21D 8/04

(54) **Method of producing sourdough bread with transglutaminase**

(30) Priority: 20.07.2011 PL 39571511
(71) Applicant: P.M.T. Trading SP. Z O.O., 90-616 Lodz (PL)
(72) Inventor: Diowksz, Anna, 91 - 214 Lodz (PL); Ambroziak, Wojciech, 91 - 473 Lodz (PL); Kordialik, Edyta, 95 - 100 Zgierz (PL)
(74) Representative: Dziubinska, Jolanta

(57) **Abstract**

The subject of the invention is a method of producing sourdough bread with improved organoleptic and useful properties and better technological parameters.

The process of preparing sourdough bread is that in the production process to the flour transglutaminase of bacterial origin is added in an amount of 3 to 99 mg/100 g and other baking additives and used transglutaminase corresponds to the enzyme dose below 100U/kg of flour.

## Description

The subject of the invention is a method of producing sourdough bread with improved taste, useful properties and better technological parameters.

The production of sourdough bread is based on the fermentation caused by microorganisms naturally colonizing the raw materials for bread production. Traditionally, a mixture of flour and water is left for a long enough time to initiate the development of required microflora. To achieve the desired effect the process is conducted in several stages by adding fresh portions of flour and water in the successive stages. In the classical technology it is possible to introduce new solutions in the form of bakery starter cultures - preparations containing carefully selected strains of lactic acid bacteria which can simplify and shorten the production process while maintaining the highest quality of produced bread.

Lactic acid fermentation which takes place in an environment of sourdough is a natural stage in the traditional production technology of rye and mixed bread and in some parts of the world also wheat bread.

The introduction of the sourdough fermentation phase is necessary in the case of rye flour used in the recipe of rye bread dough. In the rye dough elastic gluten network, characteristic of wheat dough, is not formed. Rye dough has a fine-grained structure, formed by partially hydrolysed mucilages, proteins and swollen starch grains. Under the influence of acids produced by lactic acid bacteria, the changes in the structure of starch granules take place and water-binding capacity by mucilagenous compounds and flour proteins is increased. At the same time reduced pH of the dough results in inhibition of the activity of amylolytic enzymes, which prevents excessive degradation of starch. As a result, flour gains the desired baking properties.

In the case of the wheat bread the use of sourdough is especially important for the sensory and health qualities of the product. However, in this case hydrolysis of proteins occurring during the fermentation of sourdough, to a degree depending on the individual characteristics of strains active in the fermentation process, contributes significantly to the technological characteristics of the flour. Gluten proteins contained in wheat flour play a key role in the production of bread, being responsible for its structural features, such as extensibility and elasticity of the crumb, ensuring obtaining a fully leavened bread of uniform porosity. The fermentation process causes weakening of these features.

In the case of rye and mixed dough with rye flour different mechanism of creating the structure does not allow the dough to create a gluten network characteristic of wheat dough. The aim of this invention is to produce products with improved organoleptic and useful properties and better technological parameters.

The method of producing sourdough bread according to the invention lies in the fact that the dough is prepared with the addition of transglutaminase of bacterial origin in an amount of 3 to 99 mg/100 g of flour, with the use of other baking additives.

According to the invention, the use of transglutaminase of bacterial origin used in a dose below 100U/kg of flour as one of the ingredients of the recipe results in strengthening dough and improvement of bread quality. In the method according to this invention there are used: rye flour, wheat flour or a mixture of the both and transglutaminase is added to the dough.

Bread is made from mixtures of flours used in different proportions.

According to the invention the amount of wheat flour in the used flour mixture amounts more than 50%. The use of transglutaminase as an additive in bread made on sourdough results in increasing the volume and yield of bread. Bread is characterized by good elasticity, longer retained moisture of the crumb and is resistant to crumbling.

Transglutaminase used in the invention is an enzyme that is deactivated by heating for several minutes at a temperature of 70° C, therefore it is destroyed in the process of baking.

The subject of the invention is illustrated in the examples of the production of sourdough bread from which the first relates to the process of preparing mixed wheat and rye bread, while the second and third example refer to wheat bread made on sourdough.

The following examples are intended to clarify the invention, but they do not limit its range in any way.

### Example I.

To prepare the dough from 100 kg of flour (70 kg of wheat flour and 30 kg of rye flour), designed for the production of wheat and rye bread on sourdough, the following ingredients were used:
- 75 kg of rye sourdough,
- 70 kg of wheat flour,
- 10g of transglutaminase
- 2 kg of salt,
- 2.5 kg of compressed baker's yeast
- 15 liters of water.

Rye sourdough was prepared from 30 kg of rye flour and 43.5 1 of water with the addition of 750 ml of inoculum *Lactobacillus plantarum* and 750 ml of *Lactobacillus brevis* and then it was subjected to a 18-h fermentation at 30°C. The inoculum was obtained by inoculating with a strain in an amount of 2% of sterile liquid medium MRS (containing in 1 1: 4g yeast extract, 8 g meat extract, 10 g Peptone K, 20 g glucose, 2 g triammonium citrate, 2 g dipotassium hydrogen phosphate , 5 g of sodium acetate, 0.2 g of hydrated magnesium sulfate and 0.05 g of tetrahydrate manganese (II) sulfate) and subjected to proliferation at 30° C during 24 hours. To the wheat flour there were added transglutaminase of bacterial origin, sourdough and salt in the form of solution and yeast in suspension. To prepare solutions and suspension water was added in the amount provided in the recipe. Kneading was continued for 20 minutes, then the dough was placed in a proof chamber for 40 minutes in temp. 30°C. After this time the dough was kneaded again for 5 minutes, and then divided into 550 g pieces and placed in molds smeared with oil. After 30 minutes leavening at 30°C molds with the dough were transferred to an oven preheated to 220°C. Immediately after closing the oven, steam supply to the baking oven was switched on for a few seconds. After 5 minutes the temperature was reduced to 180°C. Total baking time amounted to 40 minutes.

### Example II.

To prepare the dough from 100 kg of wheat flour designed for the production of wheat bread on sourdough, the following ingredients were used:
- 60 kg of wheat sourdough,
- 70 kg of wheat flour,
- 30g of transglutaminase
- 2 kg of salt,
- 3 kg of compressed baker's yeast,
- 35 liters of water.

Wheat sourdough was prepared from 30 kg of wheat flour and 29 1 of water with the addition of 1 liter of inoculum *Lactobacillus plantarum* and then it was subjected to a 18-h fermentation at 30°C. The inoculum was obtained by inoculating with a strain of *Lactobacillus plantarum* in an amount of 2% of sterile liquid medium MRS, the composition as in example I, and subjected to proliferation at 30° C during 24 hours.

To the flour there were added transglutaminase in powder form, sourdough as well as salt in the form of solution and yeast in suspension. To prepare solutions and suspension water was added in the amount provided in the recipe. Dough was prepared according to the known method in the temperature approx. 180°C for approx. 40 minutes.

### Example III.

To prepare the dough from 100 kg of wheat flour designed for the production of wheat bread on sourdough, the following ingredients were used:
- 60 kg of wheat sourdough,
- 70 kg od wheat flour,
- 99g of transglutaminase,
- 2 kg of salt,
- 3 kg of compressed baker's yeast,
- 45 liters of water.

Wheat sourdough was prepared from 30 kg of wheat flour and 29 1 of water with the addition of 1 liter of inoculum *Lactobacillus plantarum* and then it was subjected to a 18-h fermentation at 30°C. The inoculum was obtained by inoculating with a strain of *Lactobacillus plantarum* in an amount of 2% of sterile liquid medium MRS, the composition as in example I, and subjected to proliferation at 30° C during 24 hours.

To the flour there were added transglutaminase in powder form, sourdough as well as salt in the form of solution and yeast in suspension. To prepare solutions and suspension water was added in the amount provided in the recipe. Dough is prepared and baked according to the known method in the temperature approx. 180°C for approx. 40 minutes.

## Claims

1. Method of producing sourdough bread from flour and baking additives, **characterized in that** the dough is prepared with the addition of transglutaminase of bacterial origin in an amount of 3 to 99 mg/100 g of flour with the use of other baking additives and used transglutaminase corresponds to the enzyme dose below 100U/kg of flour.
